# FASCICULE DE BREVET EUROPEEN

(11) **EP 1 354 831 B1**
(45) Date de publication et mention de la délivrance du brevet: **06.07.2005**
(21) Numéro de dépôt: 03290403.9
(22) Date de dépôt: 19.02.2003
(51) Int. Cl.: B65G 57/24

(54) **Tour de palettisation de produits**
Palettenladeturm
Pallet loading tower

(30) Priorité: 15.03.2002 FR 0203221
(43) Date de publication de la demande: 22.10.2003
(73) Titulaire: Newtec Bag Palletizing, 68315 Illzach Cedex (FR)
(72) Inventeur: Delvaux, Yann, 68500 Guebwiller (FR); Ihler, Jean Bernard, 68200 Mulhouse (FR); Hoffbeck, Michel, 68440 Zimmersheim (FR); Pontisso, Bruno, 68190 Ensisheim (FR); Primet, Boris, 90110 Leval (FR); Ferlay, Vincent, 68100 Mulhouse (FR); Loux, Benoît, 68200 Mulhouse (FR)
(74) Mandataire: Doireau, Marc

(56) Documents cités:
- FR-A- 2 614 285
- GB-A- 876 241
- US-A- 2 946 465

## Description

L'invention concerne une tour de palettisation de produits, notamment de produits ensachés

Les dispositifs de l'art antérieur pour palettiser des produits, tels que des produits ensachés, comprennent, en général, dans leur ligne de palettisation, une tour de palettisation montée en bout d'une ligne de production des produits pour constituer une palette formée d'un empilement de couches successives de produits selon un schéma déterminé La tour de palettisation coopère en entrée avec un système d'orientation et de distribution des produits en fonction du schéma de palettisation et un système de réception de palettes vides, et en sortie avec un système de convoyage pour l'évacuation des palettes pleines de produits en vue notamment d'un suremballage à l'aide un film plastique étirable par exemple

Une tour de palettisation comprend typiquement un bâti supportant un convoyeur de groupage de produits, ou bande de groupage, et un élévateur qui supporte une palette en cours de constitution. D'une manière générale, l'élévateur d'une tour de palettisation typique a pour fonction de positionner une palette vide au niveau du convoyeur de groupage de produits et de l'abaisser d'une façon séquentielle dès qu'une couche de produits est formée jusqu'à l'évacuation de la palette constituée L'élévateur est généralement monté mobile le long d'un poteau de guidage du bâti, c'est-à-dire qu'il est monté en porte-à-faux par rapport à son système de guidage. La charge des palettes sollicite ainsi l'élévateur en flexion à chaque démarrage et arrêt, ce qui entraîne parfois un mouvement vibratoire qui déstabilise les produits palettisés et dégrade la qualité de la palette pleine en inclinant l'empilage de produits.

US-A-2,946,465 décrit, par exemple, une tour de palettisation conforme au préambule de la revendication 1.

Dans les dispositifs de l'art antérieur, l'élévateur dispose normalement d'un système de sécurité constitué par une broche d'accrochage qui s'enclenche dans une échelle latérale pour empêcher le risque de chute des palettes La sécurité agit automatiquement, la plupart du temps par manque de pression dans un système pneumatique commandant un frein, et ce quelle que soit l'origine de l'arrêt de la machine Or, cette sécurité doit être immédiate. Comme ce système fonctionne avec des plots prévus dans l'échelle et sur lesquels la broche d'accrochage s'enclenche, il n'y a blocage des palettes qu'à certaines positions déterminées par ces plots Plus ces plots sont espacés, plus il peut y avoir d'à-coups avant que la broche ne s'enclenche dans le plot le plus proche Il y a donc un risque élevé de déstabilisation de la pile de produits sur la palette, voire de chute de produits Par ailleurs, la position latérale du système de sécurité entraîne, en cas de rupture d'une des chaînes d'entraînement, une retenue de l'élévateur en biais par rapport au système de guidage. Cette position occasionne un coincement du système de sécurité qui peut gêner la remise en route de l'élévateur. Il convient de remédier à ce problème Enfin, il peut arriver, en fonction de la hauteur d'arrêt de l'élévateur, que l'accrochage de la broche se produise à la limite du bord d'un plot Son enclenchement est donc incomplet et la mise en sécurité de l'élévateur aléatoire Ce cas est peu fréquent mais doit être pris en compte

Un but de la présente invention est de résoudre ce problème en proposant une solution simple à mettre en oeuvre et sûr

A cet effet, l'invention a pour objet une tour de palettisation de produits, comprenant un bâti qui soutient au moins élévateur supportant une palette en cours de constitution apte à recevoir des produits transférés par un convoyeur à bande sur lequel ils sont groupés avant leur transfert sur ladite palette, l'élévateur étant monté mobile en translation verticale à l'intérieur d'une cage définie par au moins trois poteaux du bâti, tour de palettisation dans laquelle un système de sécurité freine la chute ou bloque en position l'élévateur quelle que soit la position de ce dernier, ledit système de sécurité étant porté par l'élévateur et comprenant un frein monté en regard d'une colonne de sécurité et propre à être actionné pour venir en contact serré avec ladite colonne de sécurité.

Avantageusement, la colonne de sécurité est distincte des poteaux du bâti et est disposée dans un plan médian vertical de l'élévateur.

De préférence, le frein est actionné par un dispositif de commande hydraulique ou pneumatique qui est apte à exercer sur le frein des forces antagonistes à celles exercées par des moyens de rappel élastique qui maintiennent le frein à distance de la colonne de sécurité.

Selon un mode de réalisation préféré de l'invention, le dispositif de commande comprend deux tiges de pistons actionnées simultanément par une source de fluide sous pression, et le frein comprend deux mâchoires disposées de part et d'autre de la colonne de sécurité

Avantageusement, chaque mâchoire est montée à l'extrémité d'un levier monté articulé sur un pivot central fixe et dont l'autre extrémité est reliée aux moyens élastiques d'une part et au dispositif de commande d'autre part

De préférence, les mâchoires sont disposées sous l'élévateur de sorte qu'en cas de chute, le poids de l'élévateur accentue le frottement desdites mâchoires sur la colonne de sécurité.

Pour la plupart des tours de palettisation de l'art antérieur, la mise en conteneur, lorsqu'elle est possible, nécessite le démontage de nombreux composants Cela entraîne sur le chantier un temps de remontage considérable (de 15 à 20 heures), retardant la mise en production de la ligne

Un mode de réalisation de l'invention se propose de résoudre ce problème en prévoyant que le bâti soit scindé en deux parties séparément transportables une partie haute qui supporte le convoyeur de groupage de produits et des moyens nécessaires à la constitution de couches sur une palette, et une partie basse formant socle où est logé l'élévateur, les plans de fixation entre les deux parties du bâti soient sensiblement situés à mi-course du déplacement vertical de l'élévateur

En général, la tour de palettisation comprend un convoyeur à rouleaux sur lesquels est enroulée une bande sans fin qui est animée d'un mouvement séquentiel de translation programmé pour constituer tout ou partie d'une couche de produits qui est transférée ensuite sur la palette en cours de constitution sur l'élévateur. La bande ne pouvant présenter d'agressivité à l'égard des enveloppes des produits, elle ne peut être jonctionnée par des agrafes ou tout autre moyen de liaison présentant des parties contendantes pouvant déchirer les produits, en particulier quand il s'agit de sacs Ainsi, le fait que cette bande soit du type sans fin, son remplacement, en cas d'usure ou de détérioration imminente, demande un temps de démontage important et impose une immobilisation de la machine qui est préjudiciable à la productivité Par conséquent, les tours de palettisation de l'art antérieur ne sont techniquement pas satisfaisantes.

Afin de résoudre les inconvénients évoqués ci-dessus en vue de réduire les temps nécessaires à la maintenance du convoyeur, il est proposé que le convoyeur à bande soit articulé sur un châssis du bâti, entre une position de groupage des produits et une position de maintenance du convoyeur

Avantageusement, le convoyeur à bande est monté pivotant vers l'une de ses deux extrémités pour basculer entre ses deux positions de groupage de produits et de maintenance

De préférence, le convoyeur à bande est un convoyeur à rouleaux autour desquels est enroulée une bande sans fin, et le convoyeur est monté pivotant autour d'un axe perpendiculaire à l'axe de rotation des rouleaux

Selon un mode de réalisation de l'invention, des moyens de blocage peuvent être prévus pour maintenir le convoyeur à bande dans l'une et/ou l'autre de ses positions de groupage des produits et de maintenance

Avantageusement, l'élévateur est lié aux poteaux du bâti par l'intermédiaire de trois chaînes enroulés autour de poulies, deux chaînes de sustentation et une chaîne de déplacement vertical

Plus particulièrement, les deux chaînes de sustentation sont disposées d'un même côté de l'élévateur et sont parallèles entre elles, chaque chaîne de sustentation est reliée, à une première extrémité, en un point haut d'attache du bâti et, à sa seconde extrémité opposée, en un point bas d'attache du bâti, et chacune des chaînes de sustentation passe, en partant de son point haut d'attache vers son point bas d'attache, au-dessous d'une première poulie puis au-dessus d'une deuxième poulie, lesdites poulies étant fixées sous l'élévateur.

Plus précisément, la troisième chaîne de déplacement est disposé en face des deux chaînes de sustentation et est fixée, à une première extrémité, en un point haut d'attache du bâti et, à sa seconde extrémité opposée, en un point haut d'attache du bâti, ladite troisième chaîne de déplacement passant, en partant de son point haut d'attache vers son point bas d'attache, sous une troisième puis une quatrième poulie, lesdites poulies étant parallèles entre elles et fixés sous l'élévateur, puis au-dessus d'une cinquième poulie d'entraînement fixée au bâti au-dessus de l'élévateur et en prise avec un organe d'entraînement motorisé

D'autres caractéristiques et avantages de l'invention apparaîtront à la lecture de la description détaillée qui suit et relative à des exemples de réalisation illustrés par les figures annexées qui représentent respectivement.
- les figures 1 et 2, des vues en perspective d'une tour de palettisation conforme à l'invention ;
- la figure 3, une vue en perspective d'un convoyeur à rouleaux et à bande sans fin de la tour de palettisation des figures 1 et 2 pour le groupage des produits à palettiser ,
- la figure 4, une vue de côté de la figure 3 ;
- la figure 5, une vue schématisée de dessus d'une partie de la tour de palettisation et d'un élévateur qui supporte une palette en cours de constitution ,
- la figure 6, une vue de côté de la figure 5 ;
- la figure 7, une vue schématisée en coupe d'un système de sécurité de l'élévateur pour le freiner ou l'immobiliser en cas de chute accidentelle ,
- la figure 8, une vue en perspective de la partie haute de la tour de palettisation ,
- la figure 9, une vue ne perspective de la partie basse de la tour de palettisation ; et
- les figure 10 à 12, des vues respectivement en perspective, de face et de droite d'un système de sustentation et de déplacement vertical de l'élévateur.

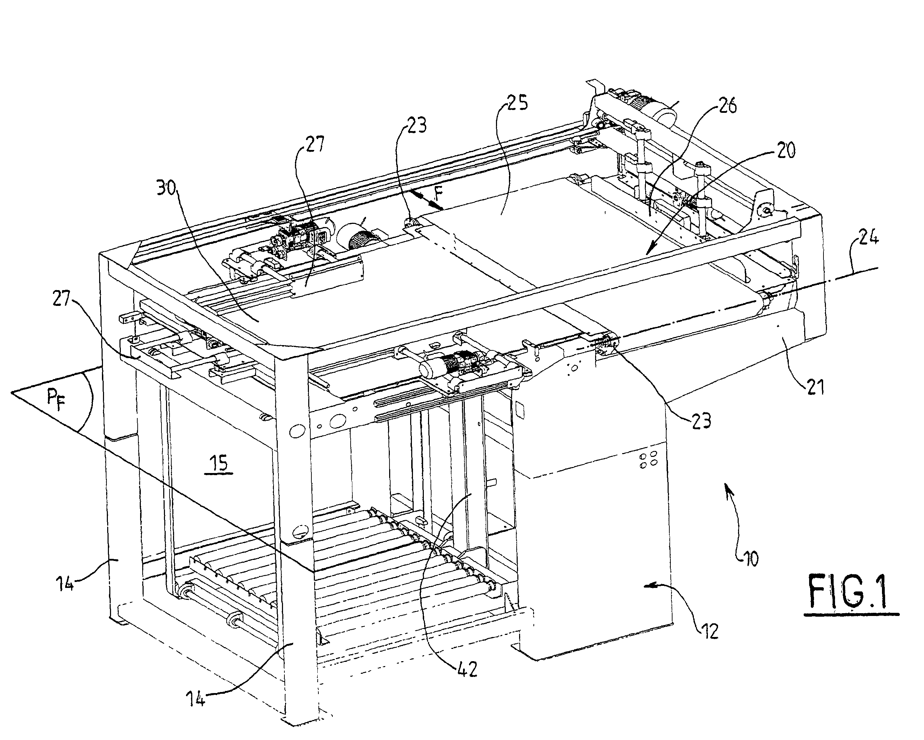

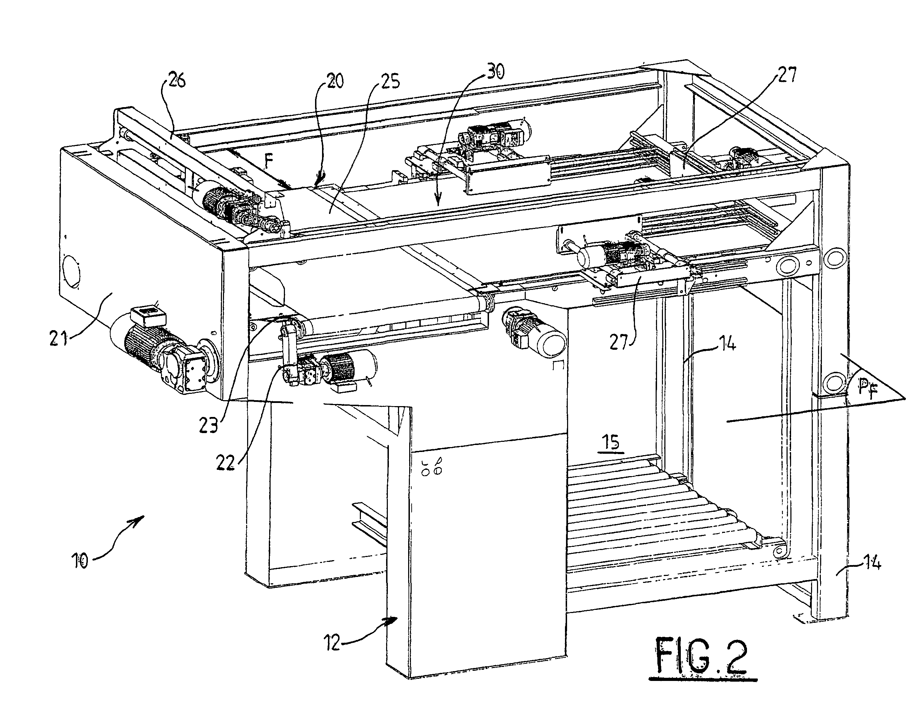

Les figures 1 et 2 représentent une tour de palettisation 10 faisant partie d'un ensemble (non représenté) appelé ligne de palettisation, ou palettiseur.

Cette tour 10 a pour fonction de rassembler des produits, par exemple se présentant sous la forme de sacs, provenant d'un système d'alimentation disposé en bout d'une chaîne de fabrication, et de les empiler en couches successives sur une palette destinée à être transférée vers une station d'évacuation où la palette peut être suremballée à l'aide d'un film étirable.

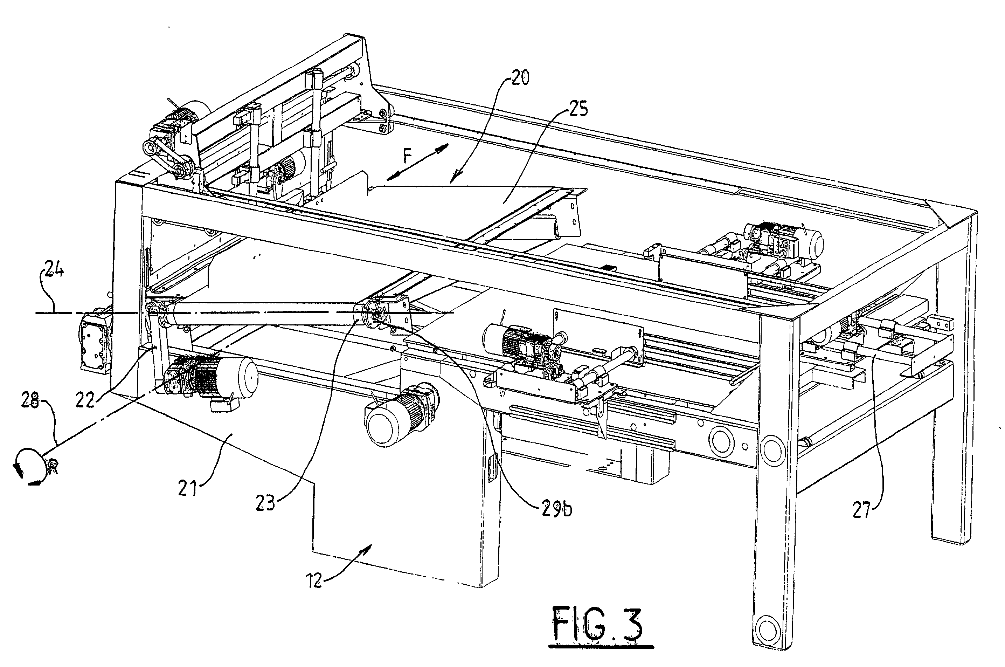

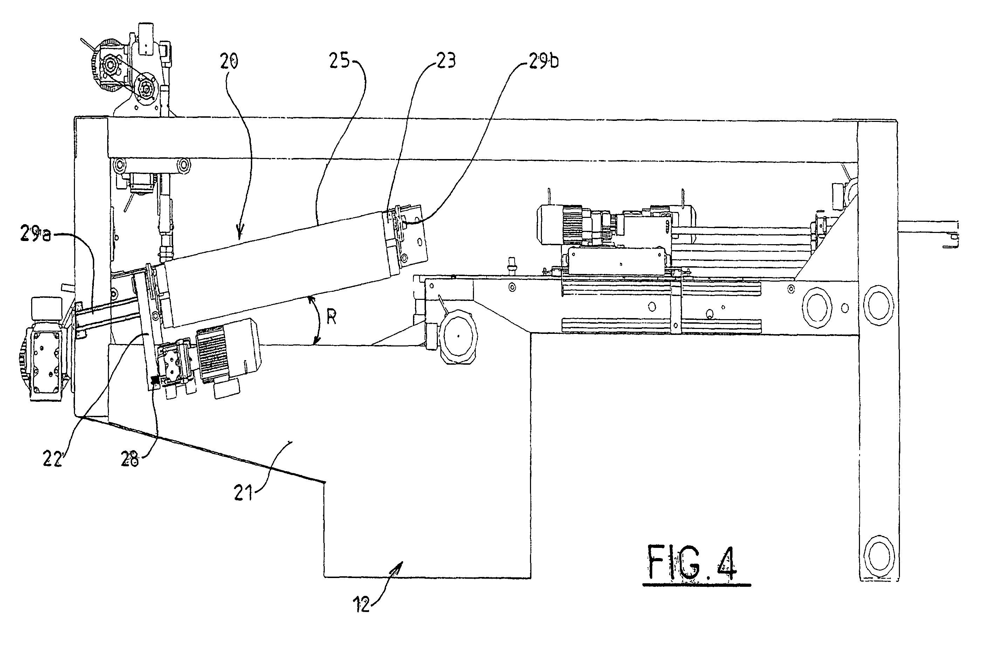

La tour 10 comprend principalement un bâti 12 reposant sur le sol et supportant notamment un convoyeur 20 pour le groupage des sacs, et un élévateur 30 qui supporte une palette en cours de constitution. Comme cela est illustré par les figures 3 et 4, le convoyeur 20 est monté pivotant, par exemple par l'intermédiaire de deux bras 22, sur un châssis 21 porté par le bâti 12 de la tour 10 Le convoyeur 20 comprend en outre au moins deux rouleaux 23 tournant autour d'axes 24 parallèles entre eux et sur lesquels est enroulée une bande sans fin 25 de transport réalisée en matériau élastomère tel par exemple que du caoutchouc Pour éviter que la bande 25 ne déchire les sacs qu'elle transporte, ses deux extrémités sont soudées entre elles pour former une bande sans fin lisse et dépourvue de toute zone contendante

La tour de palettisation 10 comprend en outre (figures 1 et 2) des râteaux 26 montés mobiles sur le bâti 12 pour pousser les produits groupés sur le convoyeur 20 afin de former tout ou partie d'une couche de produits sur la palette en cours de constitution, et des conformateurs latéraux 27 également montés mobiles sur le bâti 12 pour assurer le resserrement des produits entre eux

Dans les dispositifs de l'art antérieur, lorsqu'il fallait changer la bande de transport 25 pour maintenance suite à son usure, il était nécessaire de démonter tout le convoyeur 20, ou tout du moins de le désolidariser de son châssis 21 pour procéder au remplacement de la bande 25 Cela pouvait prendre plusieurs heures, nécessiter plusieurs techniciens et causer des pertes importantes dans la productivité de la ligne de palettisation, ces pertes pouvant se répercuter dans toute la chaîne de fabrication.

Selon un mode de réalisation du convoyeur selon l'invention illustré sur les figures 3 et 4, le convoyeur 20 est monté articule sur le châssis 21 par l'intermédiaire des bras 22, autour d'un axe de pivotement 28 sensiblement perpendiculaire aux axes 24 des rouleaux 23, c'est-à-dire sensiblement parallèle au sens de circulation de la bande 25 illustré par la flèche F. Ainsi, il est possible de faire pivoter le convoyeur 20 autour de l'axe de rotation 28, comme cela est illustré par la flèche R, pour le faire basculer vers une position de maintenance, ce qui permet d'ôter la bande de transport usée afin de la remplacer. Pour faciliter cette manoeuvre, un organe de relevage et de verrouillage 29a de type articulé permet de relever et de maintenir le convoyeur 20 dans sa position de maintenance pendant toute l'opération de changement de la bande 25. A titre d'exemple, cet organe de relevage et de verrouillage 29a peut prendre la forme d'une tige filetée articulée sur un côté du convoyeur 20 à une extrémite et traversant un écrou porté par le châssis 21 à son extrémité opposée, cette tige pouvant être mise en rotation par l'intermédiaire d'un moteur Un des rouleaux 23 peut par ailleurs être muni d'un organe de blocage 29b agissant sur une de ses extrémités pour bloquer le convoyeur 20 dans sa position de groupage des produits afin d'éviter tout risque de relevage intempestif.

Cette solution permet un démontage rapide et sans effort de la bande de groupage 25, sans moyens de manutention et avec un d'effectif réduit (un technicien à la place de deux ou trois)

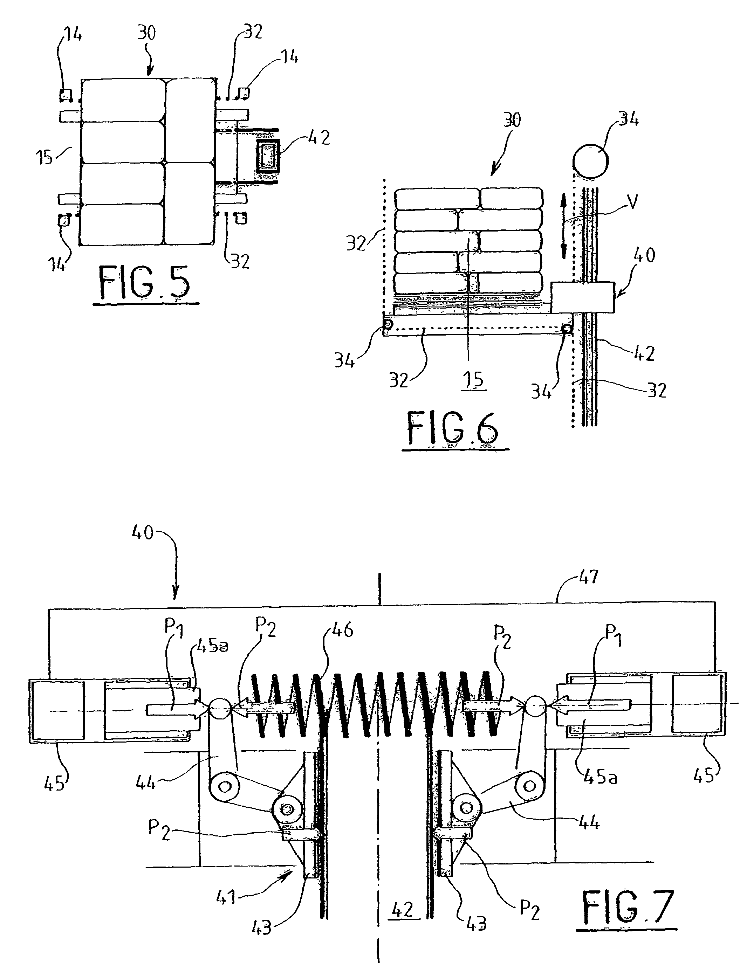

Les figures 5 et 6 représentent une partie du bâti 12 de la tour de palettisation 10 supportant l'élévateur 30 Ce bâti 12 comprend quatre poteaux verticaux 14 parallèles entre eux de façon à former une cage rigide 15 de forme sensiblement parallélépipédique à section carrée ou rectangulaire (voir également figures 1 et 2) L'élévateur 30 se déplace de haut en bas et de bas en haut dans cette cage 15 selon la flèche V afin de permettre l'empilement de couches successives des sacs amenés par le convoyeur 20 Une fois chaque couche formée sur la palette de l'élévateur, celui-ci descend afin de former une nouvelle couche au-dessus de la précédente

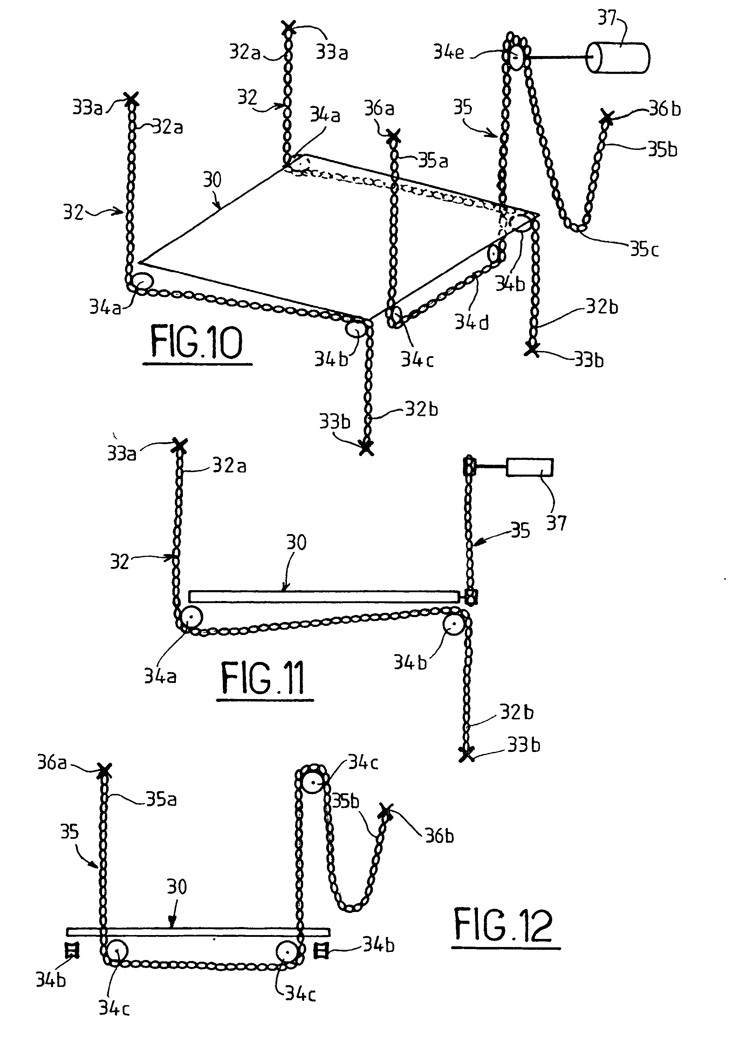

Contrairement aux solutions de l'art antérieur, l'élévateur 30 est suspendu à la tour 10 non pas en deux points (typiquement, deux glissières) mais en quatre points matérialisés par les quatre poteaux verticaux 14 du bâti 12 de la tour 10 Un système à chaînes et à poulies, détaillé ci-après en relation avec les figures 10 à 12, permet de monter et descendre l'élévateur 30 de façon extrêmement précise, sans aucun à-coup, sans aucun porte-à-faux et donc avec une sécurité maximale pour ce qui concerne la stabilité de l'empilement des sacs les uns sur les autres.

Comme cela est représenté sur la vue en perspective schématique de la figure 10 et sur les vues de droite et de gauche selon les flèches F1 et F2 des figures 11 et 12, l'élévateur 30 est suspendu au bâti par un système comprenant deux chaînes 32 de sustentation et une chaîne 35 de déplacement vertical disposée en face des deux chaînes de sustentation et dans un plan perpendiculaire les contenant.

Chaque chaîne de sustentation 32 est respectivement reliée, a une première extrémité 32a, en un point haut d'attache 33a du bâti 12 et, à sa seconde extrémité opposée 32b, en un point bas d'attache 33b du bâti Chaque chaîne de sustentation 32 passe, en partant respectivement de son point haut d'attache 33a vers son point bas d'attache 33b, au-dessous d'une première poulie 34a puis au-dessus d'une deuxième poulie 34b, lesdites poulies étant fixées sous l'élévateur 30.

La troisième chaîne 35 de déplacement vertical est reliée, à une première extrémité 35a, en un point haut d'attache 36a du bâti 12 et, à sa seconde extrémité opposée 35b, en un point bas d'attache 36b du bâti La chaîne de déplacement 35 passe, en partant de son point haut d'attache 36a vers son point bas d'attache 36b, au-dessous d'une troisième puis d'une quatrième poulie 34c et 34d fixées sous l'élévateur 30, puis au-dessus d'une cinquième poulie d'entraînement 34e fixée au bâti 12, suffisamment au-dessus de l'élévateur 30 pour que sa course de déplacement lui permette de charger et de décharger une charge sur une palette Pour cela, une ballante 35c de la chaîne 35 est prévue entre le point haut d'attache 36b et la poulie d'entraînement 34e afin de permettre le débattement vertical de l'élévateur 30 La cinquième poulie 34e, qui peut être un pignon, est en prise avec un moteur d'entraînement en rotation 37 permettant son enroulement ou son déroulement pour faire monter ou descendre l'élévateur 30 et sa charge palettisée

Ainsi, l'élévateur est à la fois suspendu par les chaînes de sustentation 32 et mise en mouvement vertical par la chaîne de déplacement 35, sans porte à faux L'effet de mouflage créé par cet agencement de chaînes permet de diviser par deux la charge à contrôler par le moteur d'entraînement et réduit de moitié son gabarit par rapport à une charge qui serait soutenue à 100%, comme sur un palettiseur classique

L'élévateur 30 ne peut ainsi basculer dans aucune direction, même sous un poids élevé de sacs Il n'y a pas de vibration nuisible ou de couple de redressement pouvant déstabiliser la pile de sacs, même s'ils sont glissants Le mouvement de translation de l'élévateur 30 est régulier et continu, de la position la plus haute à la position la plus basse

Ainsi, grâce à cette stabilité améliorée, il est possible de déplacer l'élévateur 30 beaucoup plus rapidement que dans les tours de palettisation de l'art antérieur, ce qui induit un gain de productivité notable sans risquer de nuire à la stabilité de la pile de sacs. Il n'y a plus d'effort de flexion sur le châssis de l'élévateur 30, ce qui permet également d'alléger sa structure et de réduire l'inertie de l'ensemble La charge étant mieux répartie, il n'est en outre pas utile de mettre en oeuvre de gros moteurs pour soulever l'élévateur 30

La figure 7 illustre un système de sécurité 40 prévu pour que l'élévateur 30 ne descende pas d'un coup en cas de dysfonctionnement, ce qui pourrait l'endommager gravement

Ce système de sécurité 40 comprend un frein 41 supporté par l'élévateur 30 et monté en regard d'une colonne centrale de sécurité lisse 42, solidaire du bâti 12 de la tour 10 et disposée dans un plan médian vertical de l'élévateur 30, comme cela est visible sur les figures 5 et 6

Le frein 41 comprend des mâchoires de serrage 43 montées sur les extrémités de leviers 44 à biellettes articulés autour de pivots fixes. Les extrémités opposées de ces leviers 44 sont par ailleurs reliées d'une part à des tiges 45a de pistons 45 qui sont commandées par une source de fluide sous pression tel que de l'huile ou de l'air, et d'autre part à un ressort de compression 46 faisant office d'organe de rappel élastique monté entre lesdites tiges 45a des pistons 45.

Ce système de sécurité 40 peut prendre deux positions extrêmes. Dans une première position illustrée par les flèches P1, les tiges 45a des pistons 45 sont commandés par la source hydraulique ou pneumatique 47 et leurs extrémités libres appuient simultanément sur les extrémités des leviers 44 de façon à éloigner les mâchoires 43 de la colonne centrale de sécurité 42 en s'opposant à la force de compression du ressort 46 L'élévateur 30 peut alors monter et descendre sans être freiné ni arrêté

Si l'alimentation 47 venait à être coupée, il serait très dommageable que l'élévateur 30 tombe brutalement au sol Ainsi, le ressort de compression 46 peut agir librement sur les leviers 44 à biellettes, comme illustré par les flèches P2, de façon à rapprocher les mâchoires 43 de la colonne centrale de sécurité 42 pour qu'elles viennent en contact serré avec celle-ci afin de stopper l'elévateur 30, ou tout au moins de le freiner dans sa chute

Une fois les tiges 45a des pistons 45 à nouveau commandées par la source de fluide sous pression 47, celle-ci exercent une force antagoniste supérieure à celle exercée par le ressort de compression 46 et les mâchoires de serrage 43 sont à nouveau écartées de la colonne de sécurité 42 pour que l'élévateur 30 reprenne son mouvement de translation normal.

Contrairement aux système de sécurité de l'art antérieur, le système conforme à l'invention fonctionne non pas par paliers mais en continue grâce aux mâchoires prenant appui sur une colonne dépourvue d'ergots

Par ailleurs, le système de sécurité 40 étant placé dans le plan médian de la charge à arrêter, il n'y a pas de risque que l'élévateur 30 penche plus d'un côté que d'un autre et que la pile de sacs s'en trouve déstabilisée

Le blocage est donc assuré quelle que soit la position de l'élévateur 30, sitôt qu'un événement quelconque provoque l'arrêt de la tour de palettisation 10 et la coupure de la source 47

Compte tenu de la conception du frein 40, l'effort de freinage est accentué par le poids propre de l'élévateur 30 et de sa charge sitôt le contact des mâchoires de serrage 41 avec la colonne centrale de sécurité 42. En effet, la position des articulations des biellettes des leviers 43 et la réaction de frottement des mâchoires 41 autorisent ce phénomène d'accentuation du freinage dès l'obtention du contact car les mâchoires 43 sont placées sous l'élévateur 30

Enfin, le frein 40 est très facile d'accès, facilement démontable, très simple techniquement et d'entretien aisé

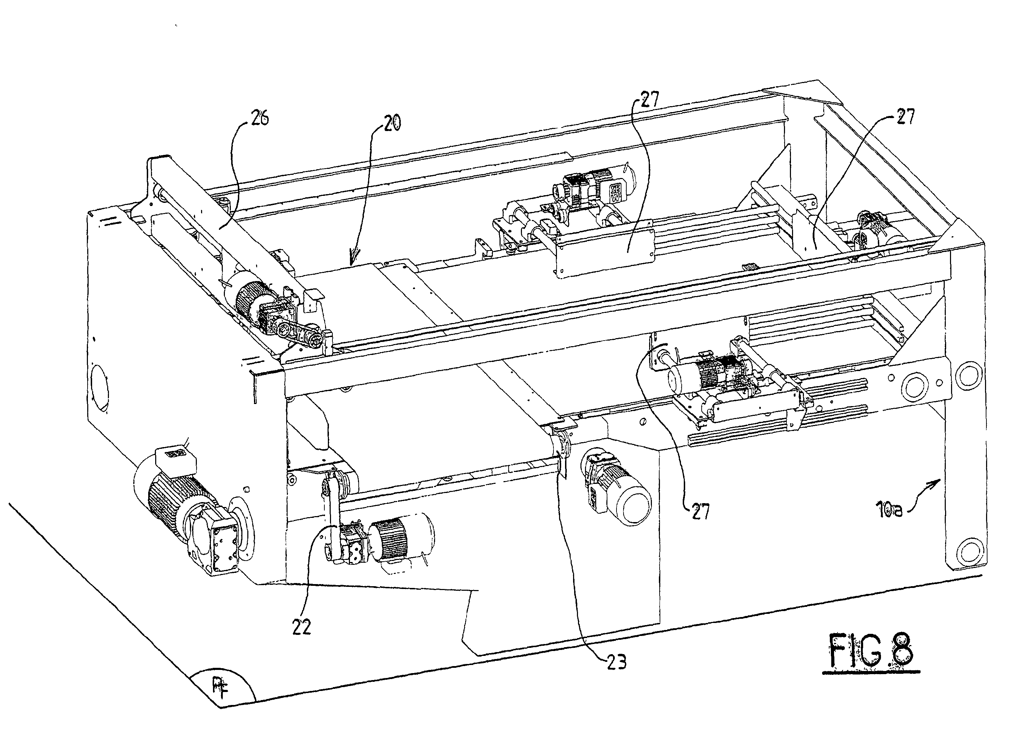

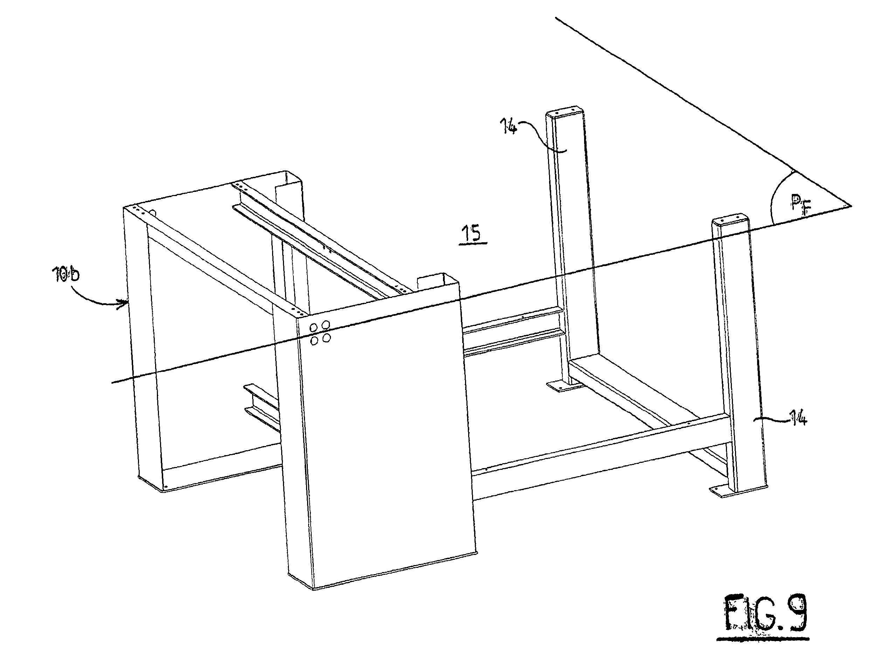

Comme cela est illustré sur les figures 8 et 9, la tour de palettisation 10, et en particulier son bâti 12, est divisée en deux parties 10a et 10b séparables au niveau d'un plan de fixation Pf disposé sensiblement à mi-chemin de la course de déplacement vertical de l'élévateur 30 qui est délimitée sensiblement par le bas du bâti et par la bande de transport 24 du convoyeur 20 La partie haute 10a de la tour comprend une partie du bâti 12 et l'ensemble des éléments fonctionnels tels que le convoyeur à bande 20, ses moteurs, les râteaux 26 et les conformateurs 27, tandis que la partie basse 10b comprend une seconde partie du bâti 12 et le système de levage à chaînes de l'élévateur 30 ainsi que ses moteurs pour former un socle. Ainsi, les hauteurs de la partie haute 10a et de la partie basse 10b de la tour 10 sont réduites de manière à se loger dans deux conteneurs respectifs sans aucune difficulté Cette solution permet de réduire les coûts de transport et les temps de montage/démontage

Il doit être bien entendu toutefois que ces exemples sont donnés uniquement à titre d'illustration de l'objet de l'Invention dont ils ne constituent en aucune manière une limitation. En particulier, l'invention a été décrite en relation avec l'empilement de sacs sur une palette mais elle est adaptée à de nombreux types de produits différents dès lors qu'ils sont empilables, tels par exemple que des cartons, des boîtes ou autres L'élévateur peut être suspendu à seulement trois poteaux dont deux seraient disposé à deux angles adjacents de l'élévateur et le troisième au milieu du côté opposé afin de répartir la charge Deux freins peuvent être disposés l'un en face de l'autre pour améliorer le freinage et répartir la force de freinage Les mâchoires peuvent être munies de patins d'adhérence facilement interchangeables. L'entraînement de l'élévateur peut être réalisé à l'aide de câbles ou de courroies à la place des chaînes La tige filetée de relevage et de verrouillage des rouleaux peut être remplacée par un vérin pneumatique ou hydraulique

## Revendications

1. Tour de palettisation (10) de produits, comprenant un bâti (12) qui soutient au moins élévateur (30) supportant une palette en cours de constitution apte à recevoir des produits transférés par un convoyeur à bande (20) sur lequel ils sont groupés avant leur transfert sur ladite palette, l'élévateur (30) étant monté mobile en translation verticale à l'intérieur d'une cage (15) définie par au moins trois poteaux (14) du bâti (12), **caractérisée en ce qu'**un système de sécurité (40) freine la chute ou bloque en position l'élévateur (30) quelle que soit la position de ce dernier, ledit système de sécurité (40) étant porté par l'élévateur (30) et comprenant un frein (41) monté en regard d'une colonne de sécurité (42) et propre à être actionné pour venir en contact serré avec ladite colonne de sécurité (42)

2. Tour de palettisation selon la revendication 1, **caractérisée en ce que** la colonne de sécurité (42) est distincte des poteaux (14) du bâti (12) et disposée dans un plan médian vertical de l'élévateur (30)

3. Tour de palettisation selon la revendication 1 ou 2, **caractérisée en ce que** le frein (41) est actionné par un dispositif de commande hydraulique ou pneumatique (45) exerçant sur le frein (41) des forces antagonistes à celles exercées par des moyens de rappel élastique (46) qui maintiennent le frein (41) à distance de la colonne de sécurité (42).

4. Tour de palettisation selon la revendication 3, **caractérisée en ce que** le dispositif de commande (45) comprend deux tiges (45a) de piston (45) actionnées simultanément par une source de fluide sous pression

5. Tour de palettisation selon l'une quelconque des revendications 1 à 4, **caractérisée en ce que** le frein (41) comprend deux mâchoires (43) disposées de part et d'autre de la colonne de sécurité (42)

6. Tour de palettisation selon la revendication 5, **caractérisée en ce que** chaque mâchoire (43) est montée à l'extrémité d'un levier (44) monté articulé sur un pivot central fixe et dont l'autre extrémité est reliée aux moyens de rappel élastique (46) d'une part et au dispositif de commande (45) d'autre part.

7. Tour de palettisation selon la revendication 5 ou 6, **caractérisée en ce que** les mâchoires (43) sont disposées sous l'élévateur (30) de sorte qu'en cas de chute de celui-ci, le poids de l'élévateur (30) accentue le frottement desdites mâchoires (41) sur la colonne de sécurité (42).

8. Tour de palettisation selon l'une quelconque des revendications précédentes, **caractérisée en ce que** le bâti (12) est scindé en deux parties séparément transportables :
- une partie haute (10a) qui supporte le convoyeur à bande (20) et des moyens (26, 27) nécessaires à la constitution de couches sur une palette et
- une partie basse (10b) formant socle où est logé l'élévateur (30),
- et **en ce que** les plans de fixation (Pf) entre les deux parties du bâti (12) sont sensiblement situés à mi-course du déplacement vertical de l'élévateur (30).

9. Tour de palettisation selon l'une quelconque des revendications précédentes, **caractérisé en ce qu'**elle comprend le convoyeur à bande (20) et que le convoyeur à bande (20) est articulé sur un châssis (21) du bâti (12), entre une position de groupage des produits et une position de maintenance du convoyeur (20).

10. Tour de palettisation selon la revendication 9, **caractérisée en ce que** le convoyeur à bande (20) est monté pivotant à proximité de l'une de ses deux extrémités pour basculer entre ses deux positions de groupage de produits et de maintenance.

11. Tour de palettisation selon la revendication 9 ou 10, **caractérisée en ce que** le convoyeur à bande (20) est un convoyeur à rouleaux (23) autour desquels est enroulée une bande sans fin (25), et **en ce que** le convoyeur à bande (20) est monté pivotant autour d'un axe (28) perpendiculaire à l'axe de rotation (24) desdits rouleaux (23).

12. Tour de palettisation selon l'une quelconque des revendications 9 à 11, **caractérisée en ce que** des moyens de blocage (29) maintiennent le convoyeur à bande (20) dans l'une et/ou l'autre de ses positions de groupage des produits et de maintenance.

13. Tour de palettisation selon l'une quelconque des revendications précédentes, **caractérisée en ce que** l'élévateur (30) est lié aux poteaux (14) du bâti (12) par l'intermédiaire de trois chaînes enroulées (32, 35) autour de poulies (34a, 34b, 34c, 34d, 34e), deux chaînes (32) de sustentation et une chaîne (35) de déplacement vertical.

14. Tour de palettisation selon la revendication 13, **caractérisée en ce que** :
- les deux chaînes de sustentation (32) sont disposées d'un même côté de l'élévateur (30) et sont parallèles entre elles,
- chaque chaîne de sustentation (32) est reliée, à une première extrémité (32a), en un point haut d'attache (33a) du bâti (12) et, à sa seconde extrémité opposée (32b), en un point bas d'attache (33b) du bâti (12), et
- chacune des chaînes de sustentation (32) passe, en partant de son point haut d'attache (33a) vers son point bas d'attache (33b), au-dessous d'une première poulie (34a) puis au-dessus d'une deuxième poulie (34b), lesdites poulies (34a, 34b) étant fixées sous l'élévateur (30).

15. Tour de palettisation selon la revendication 14, **caractérisée en ce que** :
- la troisième chaîne de déplacement (35) est disposé en face des deux chaînes de sustentation et est fixée, à une première extrémité (35a), en un point haut d'attache (36a) du bâti (12) et, à sa seconde extrémité opposée (35b), en un point bas d'attache (36b) du bâti (12),
- ladite troisième chaîne de déplacement (35) passe, en partant de son point haut d'attache (36a) vers son point bas d'attache (36b), sous une troisième puis une quatrième poulie (34c, 34d), lesdites poulies étant parallèles entre elles et fixés sous l'élévateur (30), puis au-dessus d'une cinquième poulie d'entraînement (34e) fixée au bâti (12) au-dessus de l'élévateur (30) et en prise avec un organe d'entraînement motorisé (37).

## Patentansprüche

1. Palettierturm (10) für Produkte, umfassend ein Gestell (12), welches wenigstens eine Hebevorrichtung (30) halt, welche eine im Aufbau befindliche Palette tragt, welche dazu ausgestaltet ist, Produkte aufzunehmen, welche durch ein Förderband (20) überfuhrt werden, auf welchem sie vor ihrer Uberfuhrung auf die Palette gruppiert werden, wobei die Hebevorrichtung (30) durch vertikale Verschiebung beweglich im Inneren eines Korbs (15), welcher durch mindestens drei Pfosten (14) des Gestells (12) definiert ist, beweglich angebracht ist,
**dadurch gekennzeichnet,**
**dass** ein Sicherheitssystem (40) die Hebevorrichtung (30) unabhangig von ihrer Position in ihrer Position festsetzt oder das Herunterfallen bremst, wobei das Sicherheitssystem (40) von der Hebevorrichtung (30) getragen ist und eine Bremse (41) umfasst, welche gegenuber einer Sicherheitssäule (42) angebracht ist und dazu geeignet ist, derart betatigt zu werden, dass sie in Klemmkontakt mit der Sicherheitssaule (42) kommt.

2. Palettierturm nach Anspruch 1,
**dadurch gekennzeichnet,**
**dass** die Sicherheitssäule (42) von den Saulen (14) des Gestells (12) verschieden und in einer vertikalen Mittelebene der Hebevorrichtung (30) angeordnet ist.

3. Palettierturm nach Anspruch 1 oder 2,
**dadurch gekennzeichnet,**
**dass** die Bremse (41) durch eine pneumatische oder hydraulische Steuervorrichtung (45) betätigt ist, welche auf die Bremse (41) Kräfte ausubt, welche gegensatzlich zu denjenigen sind, die durch Mittel zur elastischen Ruckstellung (46), welche die Bremse (41) von der Sicherheitssaule (42) beabstandet halten, ausgeubt werden.

4. Palettierturm nach Anspruch 3,
**dadurch gekennzeichnet,**
**dass** die Steuervorrichtung (45) zwei Stangen (45a) von Kolben (45) umfasst, welche gleichzeitig durch eine Quelle von unter Druck stehendem Fluid betatigt werden.

5. Palettierturm nach einem der Anspruche 1 bis 4,
**dadurch gekennzeichnet,**
**dass** die Bremse (41) zwei Backen (43) umfasst, welche beidseitig der Sicherheitssäule (42) angeordnet sind.

6. Palettierturm nach Anspruch 5,
**dadurch gekennzeichnet,**
**dass** jede Backe (43) am Ende eines Hebels (44) angebracht ist, welcher gelenkig an einem festen mittigen Drehzapfen angebracht ist und dessen anderes Ende einerseits mit den Mitteln zur elastischen Rückstellung (46) und andererseits mit der Steuervorrichtung (45) verbunden ist.

7. Palettierturm nach Anspruch 5 oder 6,
**dadurch gekennzeichnet,**
**dass** die Backen (43) derart unter der Hebevorrichtung (30) angeordnet sind, dass im Fall eines Herunterfallens derselben das Gewicht der Hebevorrichtung (30) die Reibung der Backen (41) an der Sicherheitssaule (42) verstärkt.

8. Palettierturm nach einem der vorhergehenden Anspruche,
**dadurch gekennzeichnet,**
**dass** das Gestell (12) in zwei separat transportierbare Teile unterteilt ist:
- ein Oberteil (10a), welches das Förderband (20) und zum Aufbau von Schichten auf einer Palette erforderliche Mittel (26, 27) trägt und
- ein Unterteil (10b), welches einen Sockel bildet, wo die Hebevorrichtung (30) untergebracht ist,
- und **dass** die Befestigungsebenen (Pf) zwischen den zwei Teilen des Gestells (12) sich im Wesentlichen auf halber Strecke der vertikalen Verschiebung der Hebevorrichtung (30) befinden.

9. Palettierturm nach einem der vorhergehenden Ansprüche,
**dadurch gekennzeichnet,**
**dass** er das Förderband (20) umfasst, und dass das Förderband (20) an einem Unterbau (21) des Gestells (12) schwenkbar zwischen einer Position zur Gruppierung der Produkte und einer Position zur Wartung der Fördereinrichtung (20) angebracht ist.

10. Palettierturm nach Anspruch 9,
**dadurch gekennzeichnet,**
**dass** das Förderband (20) in der Nahe eines seiner beiden Enden schwenkbar angebracht ist, um zwischen seinen beiden Positionen zur Gruppierung von Produkten und zur Wartung umschwenken zu konnen.

11. Palettierturm nach Anspruch 9 oder 10,
**dadurch gekennzeichnet,**
**dass** das Forderband (20) eine Fordereinrichtung mit Rollen (23) ist, um welche ein Endlosband (25) aufgerollt ist, und
**dass** das Förderband (20) schwenkbar um eine Achse (28) senkrecht zu der Drehachse (24) der Rollen (23) angebracht ist.

12. Palettierturm nach einem der Anspruche 9 bis 11,
**dadurch gekennzeichnet,**
**dass** Blockiermittel (29) das Forderband (20) in der einen und/oder der anderen seiner Positionen zur Gruppierung von Produkten und zur Wartung halten.

13. Palettierturm nach einem der vorhergehenden Anspruche,
**dadurch gekennzeichnet,**
**dass** die Hebevorrichtung (30) mit den Pfosten (14) des Gestells (12) durch drei Ketten (32, 35) verbunden ist, zwei Auftriebsketten (32) und eine Kette (35) zur vertikalen Verschiebung, welche um Rollen (34a, 34b, 34c, 34d, 34e) gewunden sind.

14. Palettierturm nach Anspruch 13,
**dadurch gekennzeichnet,**
**dass**:
- die zwei Auftriebsketten (32) auf derselben Seite der Hebevorrichtung (30) angeordnet sind und zueinander parallel sind,
- jede Auftriebskette (32) an einem ersten Ende (32a) mit einem oberen Anbringungspunkt (33a) des Gestells (12) und an ihrem entgegengesetzten zweiten Ende (32b) mit einem unteren Anbringungspunkt (33b) des Gestells (12) verbunden ist und
- jede der Auftriebsketten (32) ausgehend von ihrem oberen Anbringungspunkt (33a) in Richtung ihres unteren Anbringungspunkts (33b) unterhalb einer ersten Rolle (34a) und dann unterhalb einer zweiten Rolle (34b) verlauft, wobei die Rollen (34a, 34b) unter der Hebevorrichtung (30) befestigt sind.

15. Palettierturm nach Anspruch 14,
**dadurch gekennzeichnet,**
**dass**:
- die dritte Kette zur Verschiebung (35) gegenüber den zwei Auftriebsketten angeordnet ist und an einem ersten Ende (35a) an einem oberen Anbringungspunkt (36a) des Gestells (12) und an ihrem entgegengesetzten zweiten Ende (35b) an einem unteren Anbringungspunkt (36b) des Gestells (12) befestigt ist,
- die dritte Kette zur Verschiebung (35) ausgehend von ihrem oberen Anbringungspunkt (36a) in Richtung ihres unteren Anbringungspunkts (36b) unter einer dritten, dann einer vierten Rolle (34c, 34d), wobei die Rollen zueinander parallel und an der Hebevorrichtung (30) befestigt sind, und dann uber eine fünfte Antriebsrolle (34e), welche an dem Gestell (12) oberhalb der Hebevorrichtung (30) befestigt ist und sich im Eingriff mit einem motorisierten Antriebsorgan (37) befindet, verlauft.

## Claims

1. Product palletisation tower (10), comprising a frame (12) which supports at least one elevator (30) supporting a pallet being made up, able to receive products transferred by a belt conveyor (20) on which they are grouped together before they are transferred onto the said pallet, the elevator (30) being mounted so as to be able to move in vertical translation within a cage (15) defined by at least three posts (14) of the frame (12), **characterised in that** a safety system (40) brakes the fall or locks the elevator (30) in position whatever the position of the latter, the said safety system (40) being carried by the elevator (30) and comprising a brake (41) mounted opposite a safety column (42) and able to be actuated in order to come into close contact with the said safety column (42).

2. Palletisation tower according to Claim 1, **characterised in that** the safety column (42) is distinct from the posts (14) of the frame (12) and disposed in a vertical mid-plane of the elevator (30).

3. Palletisation tower according to Claim 1 or 2, **characterised in that** the brake (41) is actuated by a hydraulic or pneumatic control device (45) exerting on the brake (41) forces opposing those exerted by elastic return means (46) which maintain the brake (41) at a distance from the safety column (43).

4. Palletisation tower according to Claim 3, **characterised in that** the control device (45) comprises two rods (45a) for a piston (45) actuated simultaneously by a pressurised fluid source.

5. Palletisation tower according to any one of Claims 1 to 4, **characterised in that** the brake (41) comprises two jaws (43) disposed on each side of the safety column (42).

6. Palletisation tower according to Claim 5, **characterised in that** each jaw is mounted at the end of a lever (44) mounted so as to be articulated on a fixed central pivot and the other end of which is connected to the elastic return means (46) on the one hand and to the control device (45) on the other hand.

7. Palletisation tower according to Claim 5 or 6, **characterised in that** the jaws (43) are disposed under the elevator (30) so that, in the event of the latter falling, the weight of the elevator (30) accentuates the friction of the said jaws (41) on the safety column (42).

8. Palletisation tower according to any one of the preceding claims, **characterised in that** the frame (12) is divided into two separately transportable parts:
- a top part (10a) which supports the belt conveyor (20) and means (26, 27) necessary for forming layers on a pallet, and
- a bottom part (10b) forming a base where the elevator (30) is housed,
- and **in that** the fixing planes (PF) between the two parts of the frame (12) are substantially situated halfway up the vertical movement of the elevator (30).

9. Palletisation tower according to any one of the preceding claims, **characterised in that** it comprises the belt conveyor (20) and **in that** the belt conveyor (20) is articulated on a chassis (21) of the frame (12), between a position of grouping the products together and a position of holding the conveyor (20).

10. Palletisation tower according to Claim 9, **characterised in that** the belt conveyor (20) is mounted so as to pivot close to one of its two ends in order to tilt between its two product grouping and holding positions.

11. Palletisation tower according to Claim 9 or 10, **characterised in that** the belt conveyor (20) is a conveyor with rollers (23) around which an endless belt (25) is wound, and **in that** the belt conveyor (20) is mounted so as to pivot about an axis (28) perpendicular to the rotation axis (24) of the said rollers (23).

12. Palletisation tower according to any one of Claims 9 to 11, **characterised in that** locking means (29) keep the belt conveyor (20) in one or other or both of its product grouping and holding positions.

13. Palletisation tower according to any one of the preceding claims, **characterised in that** the elevator (30) is connected to the posts (14) of the frame (12) by means of three chains (32, 35) wound around pulleys (34a, 34b, 34c, 34d, 34e), two support chains (32) and one vertical-movement chain (35).

14. Palletisation tower according to Claim 13, **characterised in that**:
- the two support chains (32) are disposed on the same side of the elevator (30) and are parallel to each other;
- each support chain (32) is connected, at a first end (32a), at a top attachment point (33) on the frame (12) and, at its second opposite end (32), at a bottom attachment point (33b) on the frame (12), and
- each of the support chains (32) passes, starting from its top attachment point (33) towards its bottom attachment point (33b), under a first pulley (34a) and then over a second pulley (34b), the said pulleys (34a, 34b) being fixed under the elevator (30).

15. Palletisation tower according to Claim 14, **characterised in that**:
- the third movement chain (35) is disposed facing the two support chains and is fixed, at a first end (35a), at a top attachment point (36a) on the frame (12) and, at its second opposite end (33), at a lower attachment point (36b) on the frame (12),
- the said third movement chain (35) passes, starting from its top attachment point (36a) towards its bottom attachment point (36b), under a third and then a fourth pulley (34c, 34d), the said pulleys being parallel to each other and fixed under the elevator (30), and then over a fifth drive pulley (34e) fixed to the frame (12) above the elevator (30) and in engagement with a motorised drive member (37).
